# EUROPÄISCHE PATENTSCHRIFT

(11) **EP 1 395 447 B1**
(45) Veröffentlichungstag und Bekanntmachung des Hinweises auf die Patenterteilung: **20.10.2004**
(21) Anmeldenummer: 02742931.5
(22) Anmeldetag: 03.05.2002
(51) Int. Cl.: B60B 27/02, B60B 35/18, F16D 65/12

(54) **RADLAGERUNG EINER ANGETRIEBENEN STARRACHSE**
WHEEL BEARING FOR A DRIVEN RIGID AXLE
PALIER DE ROUE DOTE D'UN ESSIEU RIGIDE ENTRAINE

(30) Priorität: 09.06.2001 DE 10128073
(43) Veröffentlichungstag der Anmeldung: 10.03.2004
(73) Patentinhaber: DaimlerChrysler AG, 70567 Stuttgart (DE)
(72) Erfinder: WISOTZKY, Axel, 73734 Esslingen (DE)
(86) Internationale Anmeldenummer: PCT/EP2002/004844
(87) Internationale Veröffentlichungsnummer: WO 2002/100663

(56) Entgegenhaltungen:
- EP-A- 1 153 768
- WO-A-95/13198
- DE-A- 19 744 871
- FR-A- 2 687 614
- US-A- 4 421 197

## Beschreibung

Die Erfindung betrifft eine Radlagerung einer angetriebenen Starrachse mit einer in oder an einem Achskörper gelagerten Antriebswelle.

Elemente dieser Erfindung sind aus der DE 197 44 871 A1 bekannt. Eine Wälzlagerung beispielsweise einer Mehrlenkerachse liegt mit ihrem Innenring an einer Wellenschulter der Antriebswelle axial an, während der Außenring in einem Achsschenkel eingepresst ist. Die Bremsscheibe, die eine Radauflagefläche aufweist, sitzt mit einem Kerbzahnprofil auf einem entsprechenden Gegenprofil der Antriebswelle. Mit Hilfe einer zentralen Schraube auf der Antriebswelle wird die Bremsscheibe gegen das Wälzlager und dieses gegen die Wellenschulter der Antriebswelle verspannt. Hierbei ergeben einschließlich des Gewindes fünf Setzfugen.

Wird die Bremsscheibe demontiert, muss die zentrale Befestigungsschraube gelöst werden. Dabei kann sich die Anlage des Innenrings des Wälzlagers an der Wellenschulter lösen. Nach der Montage einer beispielsweise neuen Bremsscheibe wird die zentrale Schraube wieder angezogen.
Hierbei besteht die Gefahr, dass das Wälzlager z.B. durch Passungsrost daran gehindert wird, seine ursprüngliche Lage an der Wellenschulter zu erreichen. Dies kann zu einem Setzen der Fugen der Verbindung führen, was eine Verringerung der Vorspannkraft verursachen kann.
Die während des Fahrbetriebes auf das Rad wirkenden Quer- und Längskräfte wirken unmittelbar als wechselnde Beanspruchung auf die Radlagerbefestigung und können so die Radbefestigung weiter lösen.

Der vorliegenden Erfindung liegt daher die Problemstellung zugrunde, eine Radlagerung einer angetriebenen Starrachse zu entwickeln, bei der eine Demontage einer Bremsscheibe ohne Lösen der Radlagerung möglich ist.

Diese Problemstellung wird mit den Merkmalen des Hauptanspruches gelöst. Dazu ist die Radlagerung mit einer Wälzlagereinheit, die mindestens einen Innen- und mindestens einen Außenring umfasst, wobei ein zur Außenseite des Fahrzeuges orientierter Innenring mit einem in diese Richtung ausgerichteten Stirnflansch ausgebildet ist und zumindest auf einem Teilbereich seiner Länge ein Nabenprofil einer Wellen-Naben-Verbindung aufweist, das mit einem auf der Antriebswelle angeordneten komplementären Profil in Verbindung steht, mit einem am Fahrzeugaufbau drehstarr gelagerten Achskörper, der die Antriebswelle zumindest auf einem Teilbereich ihrer Länge radial umgibt und der einen Außenring der Wälzlagereinheit bildet oder aufnimmt, mit einem Radflansch, der mindestens ein Antriebsrad aufnimmt und mit einer Bremsscheibe, die einen Reibring und einen Bremsscheibentopf umfasst, wobei die Bremsscheibe zusammen mit dem Radflansch am Stirnflansch des Innenrings lösbar befestigt ist, versehen.

Zur Demontage der Bremsscheibe wird die lösbare Verbindung gelöst, mit der die Bremsscheibe und der Radflansch am Innenring der Wälzlagereinheit befestigt sind. Die Wälzlagereinheit kann derweil axial und/oder radial fixiert sein. Zum Wechseln der Bremsscheibe wird diese zusammen mit dem Radflansch abgenommen. Eine neue Bremsscheibe wird dann wiederum zusammen mit dem Radflansch montiert und am Innenring der Wälzlagereinheit lösbar befestigt. Zum Wechseln der Bremsscheibe ist nur diese Verbindung zu lösen und wieder zu befestigen. Dabei werden keine zusätzlichen Bauteile gelöst oder gelockert. Einschließlich des Gewindes ergeben sich maximal vier Setzfugen bei der Befestigung der lösbaren Verbindung.

Das Drehmoment von der Antriebswelle wird über eine formschlüssige Wellen-Naben-Verbindung auf den Innenring der Wälzlagereinheit übertragen. Über den Stirnflansch am Innenring der Wälzlagereinheit wird das Moment weiter über die kraftschlüssige Flanschverbindungen zwischen dem Innenring und der Bremsscheibe sowie zwischen der Bremsscheibe und dem Radflansch an den Radflansch und von dort auf die Räder geleitet. Der Radflansch kann auch Teil der Bremsscheibe sein. In diesem Fall wird ein Antriebsdrehmoment vom Innenring über eine kraftschlüssige Verbindung an die Bremsscheibe übertragen und von dort direkt an den Radflansch weitergeleitet.

Ein Bremsmoment wird von der Bremsscheibe an den Radflansch übertragen. Bei einer in den Radflansch integrierten Bremsscheibe wird das Bremsmoment direkt von der Bremsscheibe in den Radflansch geleitet. Sind die Bremsscheibe und der Radflansch separate Bauteile, erfolgt die Übertragung des Bremsmomentes beispielsweise über eine kraft- und/oder formschlüssige Verbindung zwischen der Bremsscheibe und dem Radflansch.

Die Bremsscheibe ist bei der Montage zentrierbar und einfach und sicher zu montieren.

Weitere Einzelheiten der Erfindung ergeben sich aus den Unteransprüchen und der nachfolgenden Beschreibung einer schematisch dargestellten Ausführungsform.

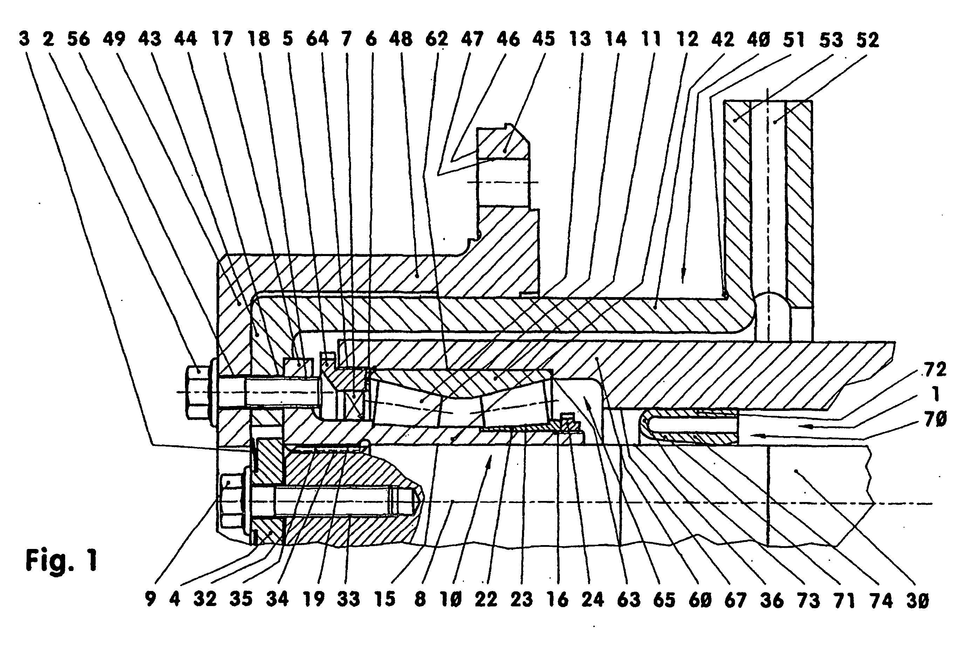

- Figur 1:: Radlagerung einer angetriebenen Starrachse.

Die Figur 1 zeigt die Radlagerung einer angetriebenen Starrachse, beispielsweise einer Hinterachse mit Zwillingsbereifung eines Nutzfahrzeuges. Das einzelne, hier nicht dargestellte Treibrad ist über eine Wälzlagereinheit (10) auf einem am Fahrzeugaufbau in der Regel federnd abgestützten Achskörper (60) gelagert. Eine das Treibrad antreibende Welle (30) ist im hohlen Achskörper (60) angeordnet. Die Antriebswelle (30) ist hierbei mit einem hier nicht dargestellten Differentialgetriebegehäuse verbunden.

Die Wälzlagereinheit (10) umfasst u.a. einen mit der Antriebswelle (30) rotierenden Innenring (12) und einen im Achskörper (60) angeordneten Außenring (11). Der Innenring (12) ist in seinem zur Fahrzeugaußenseite orientierten Bereich über eine Wellen-Naben-Verbindung (34, 19) mit der Antriebswelle (30) verbunden.

Am Innenring (12) ist an einem stirnseitigen Flansch (17) eine Bremsscheibe (40) und ein Radflansch (45) mit Nabenschrauben (2) befestigt. Die Bremsscheibe (40) umfasst u.a. einen Reibring (52) und einen Bremsscheibentopf (42). Am Radflansch (45) sind lösbar die hier nicht dargestellten Felgen der Räder befestigt.

Zwischen dem Achskörper (60) und der Antriebswelle (30) ist ein Dichtelement (70) angeordnet. Dieses dichtet einen Hohlraum (1) zwischen der Antriebswelle (30) und dem Achskörper (60) ab, der mit dem Innenraum des Differentialgetriebegehäuses verbunden ist.

Die Antriebswelle (30) ist in drei Bereiche aufgeteilt. An beiden Enden trägt die Antriebswelle (30) wellenseitige Profile einer Wellen-Naben-Verbindung, während der mittlere Bereich zumindest annähernd zylindrisch ausgebildet ist. An ihrer zur Fahrzeugaußenseite orientierten Stirnseite ist eine zentrale Gewindebohrung (33) angeordnet.

Mit dem in Figur 1 nicht dargestellten wellenseitigen Profil ist die Antriebswelle (30) formschlüssig mit dem Ausgang des Differentialgetriebegehäuses verbunden. In diesem ersten Bereich ist die Antriebswelle (30) beispielsweise als Keilwellenprofil gestaltet. Statt eines Keilwellenprofils kann auch ein Kerbzahnprofil, ein Polygonprofil, etc. eingesetzt werden. Der Außendurchmesser ist in diesem Bereich der Antriebswelle (30) mindestens um 5% größer als im mittleren Bereich. Mindestens das äußere Ende des Keilwellenprofils kann angefast sein, beispielsweise unter einem Winkel von 15° - 25° zur Horizontalen.

Der zweite, mittlere und zylindrische Bereich der Antriebswelle (30) hat einen annähernd konstanten Durchmesser. Ein zylindrischer Teilabschnitt (36) kann beispielsweise eine geringe Oberflächenrauheit, beispielsweise mit einer Rautiefe Rₜ zwischen 1 und 4 µm, aufweisen. In diesem Teilabschnitt (36) kann zumindest die Oberfläche der Antriebswelle (30) eine Härte von beispielsweise 45 - 60 HRC haben.

Im dritten Bereich der Antriebswelle (30), der zur Fahrzeugaußenseite orientiert ist, ist der Außendurchmesser der Antriebswelle (30) kleiner als im mittleren Bereich. Das wellenseitige Profil (34) dieser Wellen-Naben-Verbindung kann zum Beispiel ein Keilwellenprofil sein. Es hat dann am Umfang des Wellenabschnitts beispielsweise 20 Keile, wobei ein Keil jeweils zwei parallele Flanken hat. Zwischen den Keilen (35) ist der Durchmesser der Antriebswelle z.B. etwa 10% kleiner als der äußere Umfang. Auch hier kann das wellenseitige Profil (34) der Wellen-Naben-Verbindung ein Kerbzahnprofil, ein Polygonprofil, etc. sein.

Die auf der Antriebswelle (30) gelagerte Wälzlagereinheit (10) ist beispielsweise ein zweireihiges Kegelrollenlager mit O-Anordnung. Es umfasst zwei Innenringe (12, 22) und einen Außenring (11), zwischen denen die Wälzkörper (13) angeordnet sind. Der bereichsweise rohrförmige Innenring (12) ist an seinem nach außen ausgerichteten Ende als Flansch (17) ausgebildet. Hierbei erstreckt sich der Flansch (17) radial nach außen. In ihm sind auf einem Teilkreis mehrere durchgehende Gewindebohrungen (18) angeordnet.

Die Innenfläche des Innenringes (12) ist in zwei Bereiche unterschiedlichen Durchmessers unterteilt. Ein erster Bereich in der Nähe des Flansches (17) ist etwa so lang wie das Keilwellenprofil (34) der Antriebswelle (30). In der Bohrung dieses Bereiches ist das Nabenprofil (19), das Gegenprofil zum Keilwellenprofil (34) der Antriebswelle (30), angeordnet. Die beispielsweise 20 Nuten haben die Breite der Keile (35) des Keilwellenprofils (34) und werden an deren Flanken zentriert. Der Innendurchmesser des Nabenprofils (19) ist etwa 10% kleiner als der Außendurchmesser des Keilwellenprofils (34).

Das Nabenprofil (19) läuft zur Fahrzeugmitte hin in einen Freistich aus, an den sich der zweite Bereich (15) der Innenfläche des Innenrings (12) anschließt. Dieser zweite Bereich (15) ist hohlzylindrisch und hat etwa die Länge des Außenrings (11) der Wälzlagereinheit (10). Mit diesem Bereich (15) sitzt der Innenring auf dem zylindrischen Bereich der Antriebswelle (30).

Auf der Außenseite des Innenrings (12) ist über dem zylindrischen Bereich (15) der Innenfläche eine Wälzlagerbahn (14) angeordnet. Zur Fahrzeugmitte hin schließt sich am Innenring (12) nach einem Zwischenstück ein zylindrischer Bereich und ein Gewinde (16) an.
Auf dem zylindrischen Bereich ist ein zweiter Innenring (22) angeordnet. Auch dieser hat auf seiner äußeren Fläche eine Wälzlagerbahn (23). Über diesen Innenring (22) wird mit Hilfe einer auf dem Gewinde (16) sitzenden Einstellmutter (24) das Lagerspiel der Wälzkörper (13) eingestellt.

Der Außenring (11) der Wälzlagereinheit (10) umfasst auf seiner Innenseite zwei Laufbahnen für die Wälzkörper (13). Die Außenseite des Außenrings (11) ist zylindrisch.

Die Lagereinheit (10) kann statt in O-Anordnung auch in X-Anordnung angeordnet sein. In diesem Fall ist beispielsweise der Außenring (11) der Lagereinheit (10) geteilt. Das Lagerspiel wird dann am Außenring (11) eingestellt.

Der Achskörper (60), der auch Teil einer lenkbaren Achse sein kann, ist ein an seinen Stirnseiten offenes Rohr mit zumindest bereichsweise zylindrischem Außendurchmesser. Die Innenfläche (65) des Achskörpers (60) ist in mehrere Bereiche unterschiedlichen Durchmessers aufgeteilt, deren gemeinsame Mittellinie mit der Rotationsachse (8) zusammenfällt und die konzentrisch zur Außenfläche des Achskörpers (60) liegen.

Im ersten Bereich, am von der fahrzeugseitigen Befestigung abgewanden freien Ende des Achskörpers (60), ist ein Lagersitz (62) angeordnet. Dieser ist zur Fahrzeugmitte hin durch eine Achskörperschulter (63) und zum freien Ende hin durch ein Gewinde (64) begrenzt. An dem Lagersitz (62) ist der Außenring (11) des zweireihigen Kegelrollenlagers (10) abgestützt. Der Außenring (11) wird mit Hilfe einer sicherbaren Nabenmutter (5) über eine verdrehsichere Stützscheibe (6) gegen die Achskörperschulter (63) verspannt. Die Nabenmutter (5) kann hierbei einen Wellendichtring (7) aufweisen, der am Innenring (12) anliegt.

In einem weiteren Bereich (67) der Innenfläche (65) ist das Dichtelement (70) angeordnet. In diesem Bereich (67) beträgt der Durchmesser der Innenfläche (65) etwa zwei Drittel des Durchmessers des Lagersitzes (62).

Der Achskörper (60) kann beispielsweise bei einer Wälzlagereinheit (10) in X-Anordnung auch einen Außenring der Wälzlagereinheit bilden. An seiner Innenfläche ist dann eine Wälzlagerbahn (14) für die Wälzkörper (13) angeordnet. Die Wälzlagereinheit (10) kann auch einreihig oder als voreingestellte Lagerung ausgeführt sein.

Um den Achskörper (60) herum ist der Bremsscheibentopf (42) angeordnet. Dieser hat eine zylindrische Innen- und Außenkontur. Der Außendurchmesser des Bremsscheibentopfes (42) ist hierbei etwa 15 - 25% größer als dessen Innendurchmesser. An seinem zur Radaußenseite ausgerichtetem Ende hat er einen Befestigungsflansch (43). Dieser ist normal zur Raddrehachse (8) ausgerichtet und umfasst zwei zueinander parallele und plane Seiten. An diesem Befestigungsflansch (43) sind Bohrungen (44) fluchtend zu den Gewindebohrungen (18) des Innenringes (12) angeordnet.

An der Außenfläche des Bremsscheibentopfes (42) ist an dessen zur Fahrzeugmitte hin ausgerichteten Ende ein Reibring (52) angeordnet. In der Übergangsstelle (51), der sogenannten Schirmung, kann eine Montagefuge angeordnet sein.

Der Reibring (52) kann unlösbar oder lösbar mit dem Bremsscheibentopf (42) verbunden sein. Im Falle einer lösbaren Verbindung kann dies z.B. eine formschlüssige Welle-Nabe-Verbindung in Form eines Vielnutprofils, eines Kerbzahnprofils etc. sein.

Die parallelen Außenflächen des Reibringes (52) bilden die Reibflächen (53), an denen beim Bremsen die Bremsbeläge anliegen. Der Außendurchmesser des Reibrings (52) ist z.B. etwa 75% größer als der Außendurchmesser der Außenfläche des Bremsscheibentopfes (42).

Auf der Außenkontur des Bremsscheibentopfes (42) sitzt der Radflansch (45). Hierbei ist der Radflansch (45) etwa auf der Hälfte der Gesamtlänge des Bremsscheibentopfes (42) angeordnet und ist an diesem zentriert. Zur Außenseite des Fahrzeuges hin geht der Radflansch (45) in einen Radflanschtopf (48) über. Dieser Radflanschtopf (48) hat zumindest bereichsweise eine zylindrische Außenfläche und an seiner Stirnseite einen Befestigungsflansch (49) mit Durchgangsbohrungen (56), die auf einem Teilkreis liegen. Im montierten Zustand liegen die Durchgangsbohrungen (56) des Radflansches (45) über den Durchgangsbohrungen (44) des Bremsscheibentopfes (42) und den Gewindebohrungen (18) des Innenringes (12). In die Bohrungen (18) sind dann die Nabenschrauben (2) eingesetzt und mit einer Vorspannkraft angezogen.

Der Außendurchmesser des Radflansches (45) ist etwa anderthalb mal so groß wie der Durchmesser des Radflanschtopfes (48). Der Radflansch (45) hat an seiner zur Radaußenseite orientierten Seite eine Radauflagefläche (46). Diese ist eine plane, bearbeitete Ringfläche, die normal zur Raddrehachse (8) angeordnet ist. Der maximale Durchmesser der Radauflagefläche (46) entspricht dem maximalen Außendurchmesser des Radflansches (45), der Innendurchmesser entspricht etwa dem Durchmesser des Radflanschtopfes (48). Der nutzbare minimale Innendurchmesser einer Reibfläche (53) des Reibrings (52) ist hierbei kleiner als der maximale Außendurchmesser der Radauflagefläche (46) am Radflansch (45). Zwischen der bearbeiteten Radauflagefläche (46) und dem zylindrischen Abschnitt des Außenfläche des Radflanschtopfes (48) ist eine Entlastungskerbe angeordnet. Die Radauflagefläche (46) ist Teil einer Ebene, die die Lagerung (10) etwa mittig schneidet. Parallel zur Raddrehachse (8) sind in der Radauflagefläche (46) auf einem Teilkreis Durchgangsbohrungen (47) angeordnet. In diesen Bohrungen (47) werden die Befestigungsmittel zur Befestigung der Felgen angeordnet. Die zur Radinnenseite orientierte Stirnfläche des Radflansches (45) ist parallel zur Radauflagefläche (46). Diese Fläche ist ebenfalls eine Ringfläche, ihr innerer Durchmesser ist jedoch etwa 10% größer als der innere Durchmesser der Radauflagefläche (46).

Durch die Anordnung des Radflansches (45) auf dem Bremsscheibentopf (42) werden Kräfte aus dem Radflansch (45) in die radiale Außenseite des Bremsscheibentopfes (42) eingeleitet.

An der Stirnseite der Antriebswelle (30) ist eine Sicherungsscheibe (4) sowie eine Unterlagescheibe (3), beispielsweise in Form einer Tellerfeder, angeordnet. Beide haben eine zentrale Bohrung. Eine Befestigungsschraube (9), deren Gewinde in der Gewindebohrung (33) eingeschraubt ist, befestigt beide Scheiben (3, 4) an der Antriebswelle (30). Hierbei drückt der äußere Rand der Sicherungsscheibe (4) gegen den Innenring (12) der Wälzlagereinheit (10). Die Tellerfeder (3) liegt an ihrer zur Fahrzeugaußenseite orientierten Seite an der Innenseite des Befestigungsflansches (49) des Radflansches (45) an. Hiermit wird die Antriebswelle (30) gegen axiales Verschieben gesichert. Zur Demontage der Bremsscheibe (40) wird diese Verbindung nicht gelöst.

Zwischen der Wälzlagereinheit (10) und dem Differentialgetriebegehäuse ist das Dichtelement (70) angeordnet. Dieses ist ringförmig aufgebaut und liegt mit seiner Außenseite am zweiten Abschnitt (67) der Innenfläche (65) des Achskörpers (60) an, während seine Innenseite den Teilabschnitt (36) der Antriebswelle (30) z.B. berührt. Die Länge des Dichtelements (70) entspricht etwa der doppelten Differenz des Bohrungsdurchmessers des Achskörpers (60) und des Außendurchmessers der Antriebswelle (30) im Bereich des Dichtelements (30). In anderen Worten, die Höhe des Dichtelementes (70) ist kleiner als ein Drittel seiner Länge.

Das Dichtelement (70) ist im Querschnitt c-förmig aufgebaut, wobei der innere und der äußere Schenkel des C etwa gleich lang sind und annähernd übereinander liegen. Die Öffnung des C weist hierbei in Richtung des Differentialgetriebegehäuses. Das Dichtelement (70) begrenzt somit den Hohlraum (1), der mit dem Innenraum des Differentialgetriebegehäuses kommuniziert. Das Dichtelement (70) umfasst einen Elastomerkörper (71), der u.a. aus einem Außenmantel (72), einen Bodenmantel (73), und einer Membran (74) besteht. Die Länge der Abwicklung des Elastomerkörpers (71) entspricht etwa der vierfachen Differenz des Innendurchmessers des Achskörpers (60) und des Außendurchmessers der Antriebswelle (30).

Vor der Montage der Wälzlagereinheit (10) wird beispielsweise zuerst die sicherbare Nabenmutter (5) mit dem Wellendichtring (7) auf den Innenring (12) aufgeschoben. Nach Montage der zur Radaußenseite orientierten Wälzkörper (13) auf die Wälzlagerbahn (14) des Innenrings (12) wird der Außenring (11) eingesetzt. Hiernach wird die zweite Wälzkörperreihe (13) sowie der zweite Innenring (22) eingesetzt. Nun kann das Spiel der Wälzlagereinheit (10) mit Hilfe der ggf. sicherbaren Sicherungsmutter (24) eingestellt werden.

Die so vormontierte Wälzlagereinheit (10) wird dann in den Raum zwischen der Antriebswelle (30) und dem Achskörper (60) eingesetzt. Ggf. hat einer der beiden Lagersitze hierbei einen Presssitz. Hierbei stützt ggf. der Wellendichtring (7) die Nabenmutter (5) auf dem Innenring (12) ab. Bei der Montage wird der Außenring (11) der Wälzlagereinheit (10) durch Anziehen der Nabenmutter (5), z.B. mit Hilfe eines Hakenschlüssels, im Gewinde (64) des Achskörpers (60) die Wälzlagereinheit (10) gegen die Achskörperschulter (63) gedrückt und im Achskörper (60) festgelegt.

Bei der Montage der Wälzlagereinheit (10) kommen das wellenseitige Profil (34) der Antriebswelle (30) formschlüssig zum Eingriff mit dem nabenseitigen Profil (19) des Innenringes (12). Hierbei legen sich z.B. bei einer Keilwellenverbindung die jeweiligen Flanken aneinander an.

Nach Montage der axialen Sicherung (3, 4, 9) werden die Bremsscheibe (40) und der Radflansch (45) montiert und mit den Nabenschrauben (2) befestigt.

Zur Demontage der Bremsscheibe (40) werden die Nabenschrauben (2) gelöst. Die Befestigungsschraube (9) wird nicht demontiert. Nun können die Bremsscheibe (40) und der Radflansch (45) gemeinsam oder separat abgenommen werden.

Wird eine neue Bremsscheibe (40) montiert, wird diese gemeinsam mit dem Radflansch (45) am Innenring (12) befestigt. Die Bremsscheibe (40) wird hierbei an der Außenfläche des Innenrings (12) zentriert. Die Nabenschrauben (2) sichern die kraftschlüssige Verbindung zwischen der Bremsscheibe (40) mit dem Radflansch (45) und dem Innenring (12).

## Patentansprüche

1. Radlagerung einer angetriebenen Starrachse,
- mit einer Antriebswelle (30),
- mit einer Wälzlagereinheit (10), die mindestens einen Innen- (12, 22) und mindestens einen Außenring (11) umfasst, wobei ein zur Außenseite des Fahrzeuges orientierter Innenring (12) mit einem in diese Richtung ausgerichteten Stirnflansch (17) ausgebildet ist und zumindest auf einem Teilbereich seiner Länge ein Nabenprofil (19) einer Wellen-Naben-Verbindung (19, 34) aufweist, das mit einem auf der Antriebswelle (30) angeordneten komplementären Profil (34) in Verbindung steht,
- mit einem am Fahrzeugaufbau drehstarr gelagerten Achskörper (60), der die Antriebswelle (30) zumindest auf einem Teilbereich ihrer Länge radial umgibt und der einen Außenring (11) der Wälzlagereinheit (10) bildet oder aufnimmt,
- mit einem Radflansch (45), der mindestens ein Antriebsrad aufnimmt und
- mit einer Bremsscheibe (40), die einen Reibring (52) und einen Bremsscheibentopf (42) umfasst,
- wobei die Bremsscheibe (40) zusammen mit dem Radflansch (45) am Stirnflansch (17) des Innenrings (12) lösbar befestigt ist.

2. Radlagerung nach Anspruch 1, **dadurch gekennzeichnet, dass** die Wälzlagereinheit (10) zweireihig ist.

3. Radlagerung nach Anspruch 1, **dadurch gekennzeichnet, dass** der kleinste nutzbare Durchmesser des Reibringes (52) kleiner ist als der kleinste Durchmesser der Radauflagefläche (46).

4. Radlagerung nach Anspruch 1, **dadurch gekennzeichnet, dass** der Radflansch (45) auf der Außenkontur des Bremsscheibentopfes (42) angeordnet ist.

5. Radlagerung nach Anspruch 1, **dadurch gekennzeichnet, dass** die Krafteinleitung des Radflansches (45) auf der radialen Außenseite des Bremsscheibentopfes (42) erfolgt.

6. Radlagerung nach Anspruch 1, **dadurch gekennzeichnet, dass** zwischen dem Achskörper (60) und der Antriebswelle (30) mindestens ein Dichtelement (70) angeordnet ist, das einen zwischen der Antriebswelle (30) und dem Achskörper (60) liegenden Hohlraum (1) abdichtet, der mit dem Innenraum eines Differentialgetriebegehäuses kommuniziert.

7. Radlagerung nach Anspruch 1, **dadurch gekennzeichnet, dass** zwischen dem Innenring (12) und dem Radflansch (45) mindestens eine kraftschlüssige, lösbare Verbindung angeordnet ist.

## Claims

1. A wheel bearing of a rigid drive axle,
- having a drive shaft (30),
- having an anti-friction bearing unit (10) which comprises at least one inner (12, 22) and at least one outer ring (11), an inner ring facing the outside of the vehicle being designed with an end flange (17) oriented in this same direction and having along at least part of its length a hub profile (19) of a shaft/hub connection (19, 34) which is connected to a complementary profile (34) positioned on the drive shaft (30),
- having an axle body (60) mounted on the bodywork in a torsionally rigid manner which surrounds the drive shaft (30) radially along at least part of its length and which forms or receives an outer ring (11) of the anti-friction bearing unit (10),
- having a wheel flange (45) which receives at least one drive wheel, and
- having a brake disk (40) which comprises a friction ring (52) and a brake disk chamber (42),
the brake disk together with the wheel flange (45) being secured detachably to the end flange (17) of the inner ring (12).

2. A wheel bearing in accordance with claim 1,
**characterised in that**
the anti-friction bearing unit (10) is double-rowed.

3. A wheel bearing in accordance with claim 1,
**characterised in that**
the smallest useful diameter of the friction ring (52) is smaller than the smallest diameter of the wheel bearing surface (46).

4. A wheel bearing in accordance with claim 1,
**characterised in that**
the wheel flange (45) is positioned on the outer contour of the brake disk chamber (42),

5. A wheel bearing in accordance with claim 1,
**characterised in that**
the force introduced by the wheel flange (45) is exerted upon the radially outer side of the brake disk chamber (42).

6. A wheel bearing in accordance with claim 1,
**characterised in that**
positioned between the axle body (60) and the drive shaft (30) is at least one sealing element (70) which seals a gap between the drive shaft (30) and the axle body (60) which communicates with the interior of the differential housing.

7. A wheel bearing in accordance with claim 1,
**characterised in that**
positioned between the inner ring (12) and the wheel flange (45) is at least one non-positive detachable connection.

## Revendications

1. Palier de roue d'un essieu rigide entraîné,
- avec un arbre d'entraînement (30),
- avec une unité de palier à roulement (10) qui comprend au moins une bague intérieure (12, 22) et au moins une bague extérieure (11), une bague intérieure (12) orientée vers le côté extérieur du véhicule étant configurée avec une bride frontale (17) dirigée dans ce sens et comportant au moins sur une zone partielle de sa longueur un profil de moyeu (19) d'une liaison arbre/moyeu (19, 34), qui est relié à un profil complémentaire (34) disposé sur l'arbre d'entraînement (30),
- avec un corps d'essieu (60) monté sur la carrosserie du véhicule de manière rigide à la rotation, qui entoure radialement l'arbre d'entraînement (30) sur au moins une zone partielle de sa longueur et qui forme ou accueille une bague extérieure (11) de l'unité de palier à roulement (10),
- avec une bride de roue (45) qui accueille au moins une roue d'entraînement et
- avec un disque de frein (40) qui comprend un anneau de friction (52) et un pot de disque de frein (42),
- le disque de frein (40) étant fixé de manière amovible sur la bride frontale (17) de la bague intérieure (12) avec la bride de roue (45).

2. Palier de roue selon la revendication 1, **caractérisé en ce que** l'unité de palier à roulement (10) comprend deux rangées.

3. Palier de roue selon la revendication 1, **caractérisé en ce que** le plus petit diamètre utilisable de l'anneau de friction (52) est inférieur au plus petit diamètre de la surface d'appui de la roue (46).

4. Palier de roue selon la revendication 1, **caractérisé en ce que** la bride de roue (45) est disposée sur le contour extérieur du pot de disque de frein (42).

5. Palier de roue selon la revendication 1, **caractérisé en ce que** la transmission d'effort de la bride de roue (45) a lieu sur la face extérieure radiale du pot de disque de frein (42).

6. Palier de roue selon la revendication 1, **caractérisé en ce qu'**entre le corps d'essieu (60) et l'arbre d'entraînement (30) est disposé au moins un élément d'étanchéité (70) qui étanche un espace creux (1), situé entre l'arbre d'entraînement (30) et le corps d'essieu (60), qui communique avec l'intérieur d'un carter d'engrenage différentiel.

7. Palier de roue selon la revendication 1, **caractérisé en ce que** au moins une liaison amovible par force est disposée entre la bague intérieure (12) et la bride de roue (45).
